# EUROPEAN PATENT APPLICATION

(11) **EP 4 624 208 A1**
(43) Date of publication of application: **01.10.2025**
(21) Application number: 24166143.8
(22) Date of filing: 26.03.2024
(51) Int. Cl.: B60J 3/04

(54) **WORK MACHINE**

(71) Applicant: Sandvik Mining and Construction Oy, 33330 Tampere (FI)
(72) Inventor: Tikkanen, Jami, 33311 Tampere (FI)
(74) Representative: Sandvik

(57) **Abstract**

A work machine comprising a cabin provided with at least one window and at least one anti-glare shield to reduce a risk for operator glare due to light entering the cabin from the window. The anti-glare shield comprises at least one element made of a material with a variable light transmission characteristic.

## Description

### TECHNICAL FIELD

The present application relates to a work machine that comprises a cabin provided with at least one window.

### BACKGROUND

Work machines comprising an operator's cabin include a wide range of different work machines designed to perform specific operations. Different mobile work machines, also known as mobile machinery or non-road mobile machinery, form a substantial proportion of that kind of work machines. Such machines include for example different kind of earthmoving machines, forestry machines, or mining machines. Typically, the work machines are intended to perform specific operations in off-road environments. The mobile work machines may occasionally travel on public roads to move from one location to the next one. Some mobile work machines may, however, be intended to travel also on the public roads. This kind of mobile work machines include for example municipal machines intended for street cleaning and snow removal.

Due to their design to perform specific operations, the work machines are operated in operating situations varying in many ways. This is the case especially with the mobile work machines. Many times, these operating situations cause abrupt changes in a position of the mobile work machine relative to a horizontal position thereof. When operating outside, this causes a risk of immediate glare for an operator of the mobile work machine especially when a sun light enters the cabin of the mobile work machine from a windscreen.

Another similar operating situation may take place for example with a mining vehicle when driving out of an underground mine. This operating situation typically concerns on driving out of the underground mine with a dump truck. The dump trucks are used for transporting extremely heavy loads, such as blasted rock, from a loading site in the underground mine to an unloading site outside the underground mine. In this operating situation the dump truck advances in a tunnel upwards towards an exit of the mine in a position tilted back from the horizontal position. When the dump truck approaches a gate at the exit of the underground mine, the gate opens and allows a sun light to enter the tunnel which is usually rather modestly lit. When also considering the upwards tilted position of the dump truck, the risk of glare for the operator of the dump truck is then quite high because the sun light enters a cabin of the dump truck directly from a windscreen in an unfavourable position of the dump truck.

Conventionally used anti-glare shields in work machines include sun visors, sun screens, sun blocking curtains and tinted windows. These are either operated manually when needed, or they are stationary mounted to the machine. When using the manually operable anti-glare shields, the operator of the machine may need to constantly turn the anti-glare shield back and forth to maintain an adequate visibility without the risk for glare. When using the tinted windows, the operator of the machine may at times suffer from an impaired visibility due to a tinted section in an upper part of a tinted windscreen.

A further problem relating to the conventionally used anti-glare shields is that they may also disturb air circulation in a vicinity of the window. This may, in turn, cause insufficient defrosting of the window during disadvantageous weather conditions.

Therefore, there is a need for a more user-friendly solution to prevent a glare of an operator of a work machine, but still assuring a sufficient visibility for safely operating the work machine.

### SUMMARY

The present application provides an example of a work machine, wherein a risk for operator glare due to light entering a cabin of the work machine from a window of the cabin is reduced.

The work machine comprises a cabin provided with at least one window and at least one anti-glare shield to reduce a risk for operator glare due to light entering the cabin from the window, wherein the anti-glare shield comprises at least one element made of a material with a variable light transmission characteristic.

The present application is based on the idea of using material with a variable light transmission characteristic for implementing an anti-glare shield in a work machine.

The anti-glare shield is a medium that is designed to at least partially prevent direct visible radiation emitted from a light source, in order to avoid temporary partially blindness if viewed directly by an observer. When the cabin is provided with the anti-glare shield, the anti-glare shield is either arranged in proximity with the window or combined with the window to reduce the risk for operator glare due to light entering the cabin from the window. The element made of the material with the variable light transmission characteristic is a part whose transparency can change. The transparency of that part may change in response to the light entering the part or in response to an external control signal applied to the part.

An advantage of the solution of the present application is that the anti-glare shield can be implemented in a configuration whose operation does not require any action to be taken by the operator of the work machine. The operator may concentrate only on a driving of the work machine and using devices therein, but still all the time maintain an adequate visibility without the risk for glare. This advantageous effect can also realize in operating situations with abrupt changes in the position of the work machine. This increases the safety of the operation of the work machine.

### BRIEF DESCRIPTION OF THE DRAWINGS

In the following the present application will be described in greater detail by means of example embodiments with reference to the accompanying drawings, in which
Figure 1 shows schematically a side view of a mining vehicle;
Figures 2a, 2b and 2c show schematically an example embodiment of an anti-glare system for a work machine;
Figures 3a, 3b and 3c show schematically another example embodiment of an anti-glare system for a work machine;
Figures 4a, 4b and 5 show schematically in cross-section some example embodiments for arranging an element with a variable light transmission characteristic with respect to a window of a work machine, and
Figures 6 and 7 show schematically a side view of some example embodiments for arranging an element with a variable light transmission characteristic with respect to a window of a work machine.

For the sake of clarity, the figures show some example embodiments of the present application in a simplified manner. Like reference numerals identify like elements in the figures.

### DETAILED DESCRIPTION

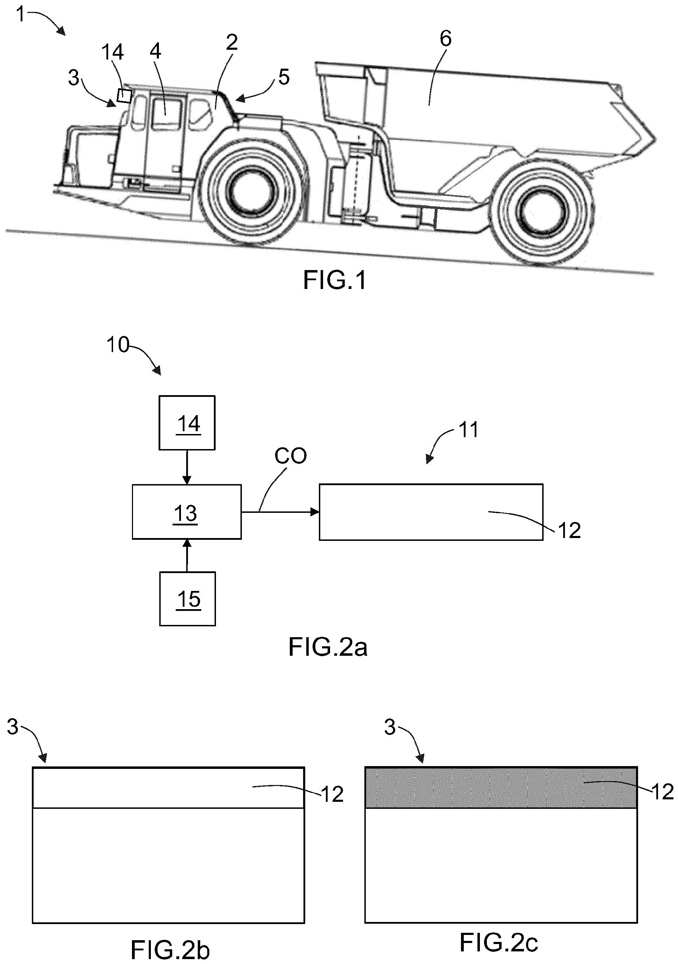

Figure 1 is a schematic side view of a mining vehicle 1. The mining vehicle 1 comprises a cabin 2 for an operator of the mining vehicle 1. The cabin 2 comprises a windscreen 3. Typically, the cabin 2 comprises one or more side windows 4 too. The cabin 2 may also comprise a rear window 5.

The mining vehicle 1 of Figure 1 is a dump truck comprising a dump box 6. The dump truck can for example be used in a mine, a quarry, or an excavation site. The dump truck is used for transporting extremely heavy loads, such as blasted rock, rock material or soil from a loading site to an unloading site.

The mining vehicle 1 is schematically shown in Figure 1 in an operating position, wherein the mining vehicle 1 advances upwards in a position tilted back from the horizontal position. The operating position like that may for example take place when the mining vehicle 1 advances upwards towards an exit of an underground mine. When the mining vehicle 1 achieves a gate of the mine and the gate opens, the risk of glare for an operator of the mining vehicle 1 is then quite high because of a sun light entering the cabin 2 of the mining vehicle 1 directly from the windscreen 3 in an unfavourable position of the mining vehicle 1.

The mobile mining vehicle 1 of Figure 1 is only one example of mobile work machines wherein a solution reducing a risk for operator glare due to light entering the cabin 2 from a window may be used. Some examples of other mobile work machines are other mining machines or earthmoving machines. These machines include for example bucket loaders, excavators, and bulldozers. Some further examples of mobile work machines are forestry machines, such as harvesters or forwarders, or other mobile work machines typically used in off-road environments. In addition to the mobile work machines typically used in off-road environments, the solution may be applied with mobile work machines specifically intended to travel also on the public roads. This kind of mobile work machines include for example municipal machines intended for street cleaning and snow removal. In mobile work machines a risk of sudden glare for an operator of the mobile work machine is especially high. This is because the mobile work machines are often operated in environments wherein abrupt changes in a position of the mobile work machine relative to a horizontal position thereof may take place.

In addition to the mobile work machines, the solution may be applied in work machines that are mainly stationary, but a position or orientation of which may change either constantly or intermittently. A work machine like that is for example a bucket wheel loader. In such work machines, there may be a risk of glare for the operator of the work machine when the machine turns in relation to the sun.

The cabin of the work machine may be an integral part of a frame of the work machine. Alternatively, the cabin may be an entity that is separately attachable to and detachable from the frame of the work machine.

Regarding to a work machine comprising a cabin provided with at least one window and at least one anti-glare shield to reduce a risk for operator glare due to light entering the cabin from the window, the anti-glare shield comprises at least one element that is made of a material with a variable light transmission characteristic. The present application is based on the idea of using material with a variable light transmission characteristic for implementing an anti-glare shield in a work machine.

The variable light transmission characteristic means that the element with that characteristic has at least a first transparent state of operation and a second at least partially non-transparent state of operation. In the first transparent state of operation the element allows the light entering the element to flow through the element. In other words, in the first transparent state of operation, the operator's visibility through the element is undisturbed. In the second at least partially non-transparent state of operation the element prevents at least some of the light entering the element to flow through the element. Therefore, in the second state of operation the element may be in a translucent state of operation. In the translucent state of operation, the element allows some light entering the element to flow through the element. Alternatively, in the second state of operation the element may be in a completely non-transparent state of operation. In the completely non-transparent state of operation the element does not allow any light entering the element to flow through the element. In other words, in the second at least partially non-transparent state of operation, the operator's visibility through the element is either disturbed or completely blocked.

According to an example embodiment, the element with the variable light transmission characteristic is an element with a passively controllable light transmission characteristic for affecting on the transparency of the element. In the element with the passively controllable light transmission characteristic the transparency of the element changes depending on the degree of the sun light or a light from another light source entering the element. The sun light entering the element causes the element to darken by molecular structure changes taking place in particles of the element.

According to an example embodiment of the element with the passively controllable light transmission characteristic, the particles in the element are configured to darken in response to a heat of the sun light entering the element. An example embodiment of this kind of element is an element made of thermochromatic glass film.

According to another example embodiment of the element with the passively controllable light transmission characteristic, the particles in the element are configured to darken in response to an ultraviolet light entering the element. An example embodiment of this kind of element is an element made of photochromatic film.

When the element with the passively controllable light transmission characteristic is applied for implementing an anti-glare shield, and when no direct sun light enters the element, the element remains transparent for allowing an operator of a work machine to see through the element. If the direct sun light enters the element, the element darkens for preventing the glare for the operator.

According to an example embodiment, the element with the variable light transmission characteristic is an element with an electrically controllable light transmission characteristic for affecting on the transparency of the element. The transparency of the element can thus be controlled electrically by applying an electrical control signal to an element. According to an example element the electrical control signal applied to the element is a control voltage applied to the element. According to an example embodiment, in an inactivated state of operation of the element no control voltage is applied to the element, and in an activated state of operation of the element a control voltage is applied to the element.

According to an example embodiment, the element with the variable light transmission characteristic comprises particles with an electrically controllable state for affecting on the transparency of the element. According to this example embodiment, the element comprises particles the state of which can be controlled electrically to effect on the transparency of the element. The state of the particles can be controlled for example by controlling one of an orientation, position, or coloration of the particles in the element.

In an example embodiment of an element comprising particles the orientation of which can be electrically controlled, in the inactivated state of operation the particles are randomly oriented in the element and scatter the entering light. In other words, in the inactivated state of operation the element does not allow the light entering the element to flow directly through the element. In the activated state of operation, the particles in the element orient themselves parallel to each other and allow the light entering the element to flow through the element. When there is no risk for operator glare, the element is maintained in or controlled to the activated state of operation. In the activated state of operation, the light entering the element flows through the element and the operator can see through the element with undisturbed visibility. When there is a risk for operator glare, the element is maintained in or controlled to the inactivated state of operation. In the inactivated state of operation, the elements scatter the light entering the element, thereby preventing the operator glare. An example embodiment of this kind of element is an element made of Polymer Dispersed Liquid Crystal film comprising liquid crystals.

In an example embodiment of an element comprising particles the position of which can be electrically controlled, in the inactivated state of operation the particles in the element are randomly positioned. The randomly positioned particles at least partially prevent the light entering the element to flow through the element. In the activated state of operation, the particles line up in straight lines and allow the light entering the element to flow through the element. When there is no risk for operator glare, the element is maintained in or controlled to the activated state of operation. In the activated state of operation, the light entering the element flows through the element and the operator can see through the element with undisturbed visibility. When there is a risk for operator glare, the element is maintained in or controlled to the inactivated state of operation. In the inactivated state of operation, the light entering the element is at least partially prevented to flow through the element, thereby preventing the operator glare. An example embodiment of this kind of element is an element made of Suspended Particle Device film. The Suspended Particle Device film comprises positively charged lithium ions with missing electrons that travel back and forth between two electrodes through a medium that separates them.

In an example embodiment of an element comprising particles the coloration of which can be electrically controlled, in the inactivated state of operation the particles in the element are clear and allow the light entering the element to flow through the element. In the activated state of operation, the particles darken and at least partially prevent the light entering the element to flow through the element. When there is no risk for operator glare, the element is maintained in or controlled to the inactivated state of operation. In the inactivated state of operation, the light entering the element flows through the element and the operator can see through the element with undisturbed visibility. When there is a risk for operator glare, the element is maintained in or controlled to the activated state of operation. In the activated state of operation, the light entering the element is at least partially prevented to flow through the element, thereby preventing the operator glare. An example embodiment of this kind of element is an element made of electrochromic glass film comprising chargeable lithium ions.

Figures 2a, 2b and 2c show schematically an example embodiment of an anti-glare system 10 for a work machine for reducing a risk for operator glare. Figure 2a shows an anti-glare shield 11 comprising an element 12 made of a material with an electrically controllable light transmission characteristic. In the example embodiment of Figures 2a to 2c the anti-glare shield 11 is thus formed of the single element 12. In Figures 2b and 2c the element 12 is arranged at a top section of a windscreen 3 of a work machine. In Figure 2b, the element 12 is in a transparent state of operation and in Figure 2c the element 12 is in at least partially non-transparent state of operation.

The anti-glare system 10 further comprises a control unit 13 connected to the element 12. The control unit 13 is configured to provide an electric control signal CO for controlling a light transmission of the element 12. The control unit 13 is located at some position in the work machine, for example inside a dashboard in the cabin 2.

Referring to the different example embodiments of the element 12 with the electrically controllable light transmission characteristic, as discussed above, the control signal CO may for example be a control voltage. A magnitude of the control voltage is set to be suitable to cause the intended change in the transparency of the element 12. Depending on the operation principle of the element 12, the control voltage is either activated or deactivated for causing the intended change in the transparency of the element 12. The intended change in the transparency of the element 12 may thus be a change of the state of the element 12 from the transparent state of operation to at least partially non-transparent state of operation, or vice versa, a change of the state of the element 12 from the at least partially non-transparent state of operation to the transparent state of operation. Furthermore, depending on the operation principle of the element 12, the magnitude of the control voltage to be applied to the element 12 may be adjustable to adjust the degree of the transparency of the element 12.

The anti-glare system 10 further comprises at least one of a light sensor 14 or a user interface element 15 connected to the control unit 13. The at least one of the light sensor 14 or the user interface element 15 is configured to initiate a control of the transparency of the element 12. In other words, the anti-glare system 10 comprises a light sensor 14 and/or a user interface element 15 to initiate a control of the transparency of the element 12.

The light sensor 14 provides an automatic control for controlling the state of the element 12 between the transparent state of operation and the at least partially non-transparent state of operation. When the light sensor 14 receives light with a sufficient intensity to cause the operator glare, the light sensor 14 activates the control of the state of the element 12 from the transparent state of operation to the at least partially non-transparent state of operation. Correspondingly, when the intensity of the light received by the light sensor 14 is not any more sufficient to cause the operator glare, the light sensor 14 activates the control of the state of the element 12 from the at least partially non-transparent state of operation to the transparent state of operation. If the magnitude of the control voltage to be applied to the element 12 can be adjusted to adjust the degree of the transparency of the element 12, the degree of the transparency of the element 12 may be adjusted according to the intensity of the light received by the light sensor 14.

The light sensor 14 is intended to activate the anti-glare shield 11 to reduce a risk for operator glare only when the operator of the work machine is exposed to direct sunlight, or to a direct light from another light source. Therefore, the light sensor 14 is arranged at an appropriate position inside or outside the cabin 2, where it can sense ambient light undisturbed. The position of the light sensor 14 is selected such that lights of the work machine or their reflections do not affect the light sensor 14. Referring to Figure 1, the light sensor 14 is shown schematically at an upper part of the cabin 2 outside the cabin 2. Different shades may also be used with the light sensor 14 to protect the light sensor 14 against disturbing lights or their reflections.

The user interface element 15 is configured to initiate the control of the light transmission of the element 12 in response to some operation provided by the operator. Here the operation provided by the operator is intended to cause a change of the state of the element 12 from the transparent state of operation to the at least partially non-transparent state of operation, or vice versa.

According to an example embodiment, the user interface element 15 is a manual switch. The operator may use the manual switch to initiate the control of the state of the element 12.

According to an example embodiment, the user interface element 15 is a device comprising a sound detector. The sound detector is configured to receive and identify commands spoken by the operator to initiate the control of the state of the element 12.

According to an example embodiment, the user interface element 15 is a device comprising a haptic or gesture detector. The haptic or gesture detector is configured to receive and identify commands provided by a touch or a gesture of the operator to initiate the control of the state of the element 12.

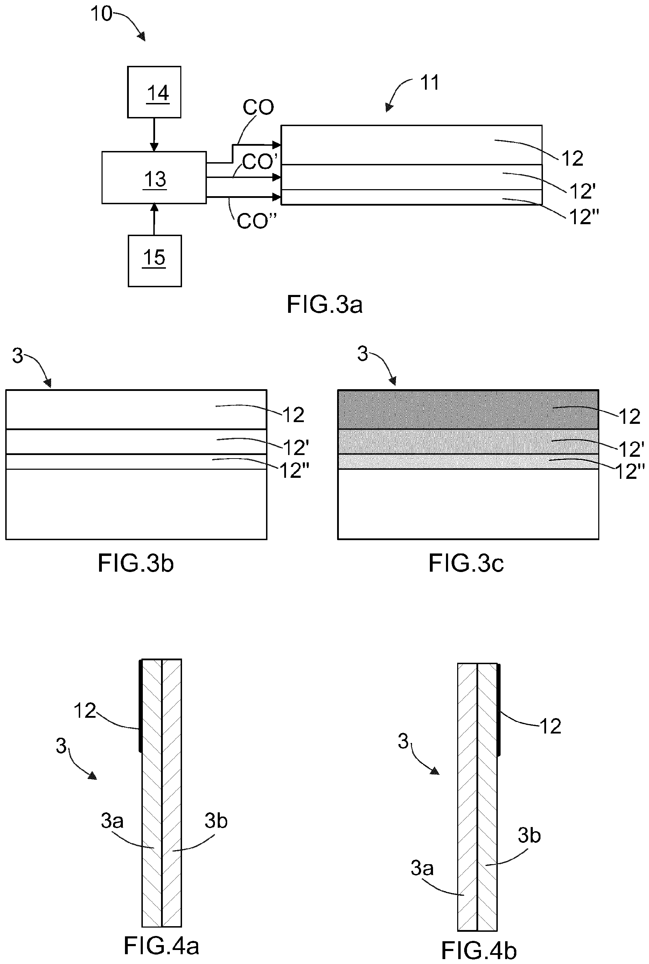

Figures 3a, 3b and 3c show schematically an example embodiment of another anti-glare system 10 for a work machine for reducing a risk for operator glare. In the example embodiment of Figures 3a to 3c the anti-glare shield 11 is formed of three elements 12, 12', 12" that are made of a material with an electrically controllable light transmission characteristic. The general structure and the operation principle of the example embodiment of Figures 3a, 3b and 3c is otherwise similar to that of Figures 2a, 2b and 2c. Referring to Figures 3b and 3c, the three elements 12, 12', 12" are arranged at a windscreen 3 of a work machine, having a layout of one below the other from a top section of the windscreen 3 towards a bottom section of the windscreen 3. The layout of the elements 12, 12', 12", however, does not extend up to the bottom section of the windscreen 3. The elements 12, 12', 12" may be of a same size, or of different a size as schematically shown in Figures 3a to 3c.

The elements 12, 12', 12" may be controlled separately by the control unit 13. Therefore, the control unit 13 may be configured to provide separate control signals CO, CO', CO" to control the state or degree of the transparency of each element 12, 12', 12" separately. The separately controllable state or degree of the transparency of the elements 12, 12', 12" is shown schematically in Figure 3c with different shades of the elements 12, 12', 12".

An advantage of the example embodiment of Figures 3a, 3b and 3c is that the area of the windscreen 3, at which the state or degree of the transparency of the windscreen 3 may be affected to, is adjustable. The adjustment may depend on the actual need to reduce the risk for operator glare.

In the example embodiments of Figures 2a to 2c and Figures 3a to 3c one or more elements 12, 12', 12" with electrically controllable light transmission characteristic were shown. If one or more elements 12 with passively controllable light transmission characteristic are applied, they may be applied in similar layouts as shown in Figures 2b, 2c, 3b, 3c.

In the example embodiments of Figures 2a to 2c and 3a to 3c the window is a windscreen 3, but as an example herein any other window of a cabin of a work machine could be used as well.

An advantage of applying in the anti-glare shield 11 one or more elements 12, 12', 12" made of the material with the electrically controllable light transmission characteristic over the material with the passively controllable light transmission characteristic is a faster response time to the sensed sunlight, or other light, that may cause the risk for the operator glare.

An advantage of applying in the anti-glare shield 11 one or more elements 12, 12', 12" of the material with the passively controllable light transmission characteristic over the material with the electrically controllable light transmission characteristic is a simpler structure of the anti-glare system 10. This is because with the element(s) made of the material with the passively controllable light transmission characteristic no devices external to the one or more elements 12, 12', 12" are needed.

An advantage of using in a work machine an anti-glare shield comprising at least one element made of a material with a variable light transmission characteristic is that the anti-glare shield can be implemented in a configuration whose operation does not require any action to be taken by the operator of the work machine. The operator may concentrate only on a driving of the work machine and using devices therein. The operator may all the time maintain an adequate visibility without the risk for glare, even in operating situations with abrupt changes in the position of the work machine. The operator does not also need to turn the anti-glare shield back and forth, or to suffer from an impaired visibility due to a tinted section in an upper part of a tinted window as in prior art solutions.

According to an example embodiment, the element with the variable light transmission characteristic comprises at least two sets of particles which have different responses to the light entering the element or to the control signal applied to the element. According to this example embodiment, the change in the state of the particles may be different in the different sets of the particles. This has the effect that at least two different areas with different transparencies can be implemented in a single element made of material with the variable light transmission characteristic.

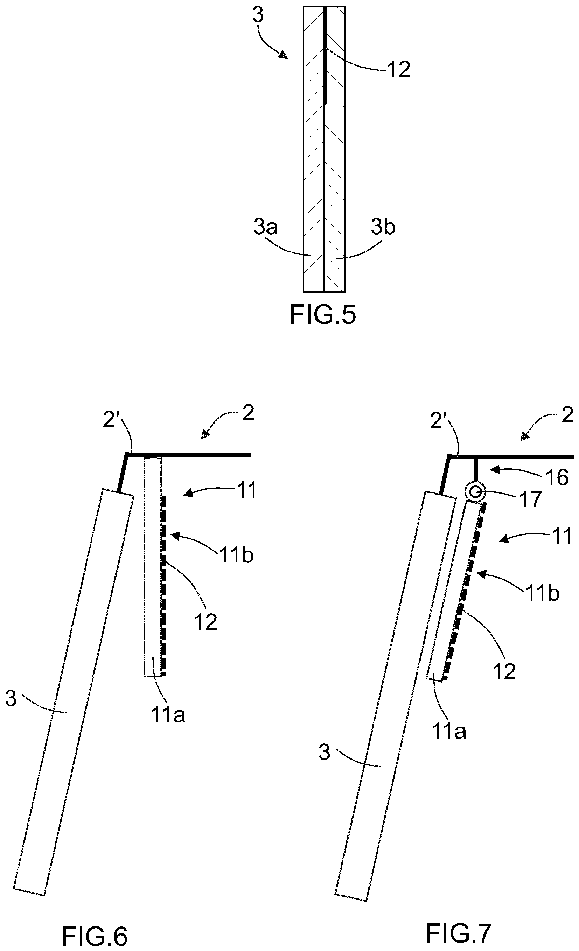

Figures 4a, 4b and 5 show schematically in cross-section some example embodiments for arranging an element with a variable light transmission characteristic with respect to a window of a work machine. In the examples of Figures 4a, 4b and 5, the window is a windscreen 3, but, again, as an example herein any other window of a cabin of a work machine could be used as well. In the examples of Figures 4a, 4b and 5, the windscreen 3 is a two-layer window comprising two windowpanes laminated to each other. The windscreen 3 comprises a first windowpane 3a, which forms the outer windowpane facing away from a cabin of a work machine. The windscreen 3 further comprises a second windowpane 3b, which forms the inner windowpane facing to the cabin of the work machine. The example arrangements of Figures 4a and 4b may also be applied with one-layer windows comprising a single windowpane.

In the example arrangement of Figure 4a the element 12 with the variable light transmission characteristic is attached to an exterior surface of the windscreen 3. In the example arrangement of Figure 4b the element 12 with the variable light transmission characteristic is attached to an interior surface of the windscreen 3. The element 12 may be attached to the respective surface of the window for example with an adhesive material that does not affect on the transparency of the element 12. An advantage of the example arrangement of Figure 4b over the example arrangement of Figure 4a is that the element 12 with the variable light transmission characteristic is not exposed to different external effects subjected to the windscreen 3. These external effects may for example include an operation of a windscreen wiper or stones flying into the window.

In the example arrangement of Figure 5 the element 12 with the variable light transmission characteristic is laminated between the first 3a and the second 3b windowpanes. An advantage of the example arrangement of Figure 5 is that the element 12 with the variable light transmission characteristic is not directly exposed to any external effects subjected to the windscreen 3 inside or outside the cabin 2.

Figures 6 and 7 show schematically a side view of some example embodiments for arranging an element with a variable light transmission characteristic with respect to a window of a work machine. In the examples of Figures 6 and 7 the window is a windscreen 3, but, again, as an example herein any other window of a cabin of a work machine could be used as well.

In the example embodiments of Figures 6 and 7 the anti-glare shield comprises a first part 11a that is transparent and comprises at least part of a body of the anti-glare shield 11. The anti-glare shield 11 further comprises a second part 11b which is attached to the first part 11a. In the example embodiments of Figures 6 and 7 the anti-glare shield 11 is thus formed of the first part 11a and the second part 11b. The second part 11b is formed of an element 12 with the variable light transmission characteristic.

In the example embodiments of Figures 6 and 7 the anti-glare shield 11 is attached to a frame 2' of the cabin 2. In Figure 6 the anti-glare shield 11 is attached to the frame 2' of the cabin 2 such that a position of the anti-glare shield 11 is constant. In Figure 7 the anti-glare shield 11 is attached to the frame 2' of the cabin 2 by a fastener 16 comprising a joint 17 such that the position of the anti-glare shield 11 can be adjusted. The joint 17 enables the anti-glare shield 11 to be turned into an operator's field of vision and away from the operator's field of vision.

An advantage of the example arrangements of Figures 4a, 4b and 5 over the example embodiments of Figures 6 and 7 is that the element 12 or the elements 12, 12', 12" are integral or integrated with the windscreen 3. This has the effect that the element 12 or the elements 12, 12', 12" does not actually require any space in the cabin of the work machine or disturb air circulation in the vicinity of the windscreen 3.

An advantage of the example arrangements of Figures 6 and 7 over the example embodiments of Figures 4a, 4b and 5 is that the anti-glare shield 11 does not need to be replaced if the windscreen 3 is replaced. Instead of fastening the anti-glare shield 11 to the frame 2' of the cabin 2, the anti-glare shield 11 can be fastened detachably to a window of a cabin with appropriate fasteners. In this case too, the fasteners may be equipped with a joint that enables the anti-glare shield 11 to be turned into an operator's field of vision and away from the operator's field of vision.

It will be obvious to a person skilled in the art that, as the technology advances, the inventive concept can be implemented in various ways. The present application and its example embodiments are not limited to the examples described above but may vary within the scope of the claims.

## Claims

1. A work machine comprising a cabin provided with at least one window and at least one anti-glare shield to reduce a risk for operator glare due to light entering the cabin from the window, wherein
the anti-glare shield comprises at least one element made of a material with a variable light transmission characteristic.

2. A work machine as claimed in claim 1, wherein the element has a first transparent state of operation and a second at least partially non-transparent state of operation.

3. A work machine as claimed in claim 1 or 2, wherein the element is an element with an electrically controllable light transmission characteristic for affecting on the transparency of the element.

4. A work machine as claimed in any one of the preceding claims, wherein the element comprises particles with an electrically controllable state for affecting on the transparency of the element.

5. A work machine as claimed in claim 4, wherein the state of the particles is configured to be controlled by controlling one of an orientation, position, or coloration of the particles.

6. A work machine as claimed in any one of claims 3 to 5, wherein there is a control unit configured to provide an electric control signal for controlling the transparency of the element.

7. A work machine as claimed in any one of preceding claims 3 to 6, wherein there is at least one of a light sensor or a user interface element to initiate a control of the transparency of the element.

8. A work machine as claimed in any one of the preceding claims, wherein the material with the variable light transmission characteristic is a Polymer Dispersed Liquid Crystal film.

9. A work machine as claimed in any one of the preceding claims, wherein the element is attached to an exterior surface or an interior surface of the window.

10. A work machine as claimed in any one of preceding claims 1 to 8, wherein the element is laminated between at least two windowpanes forming the window.

11. A work machine as claimed in any one of preceding claims 1 to 8, wherein the anti-glare shield comprises a first part that is transparent and comprises at least a part of a body of the anti-glare shield, and a second part formed of an element with the variable light transmission characteristic and attachable to the first part.

12. A work machine as claimed in claim 11, wherein the first part of the anti-glare shield comprises at least one fastener for fastening the anti-glare shield to one of the window or a body of the cabin detachably.

13. A work machine as claimed in any one of the preceding claims, wherein the work machine is a mobile work machine.

14. A work machine as claimed in any one of the preceding claims claim 13, wherein the work machine is a mobile mining vehicle.

15. A cabin of a work machine, which comprises at least one window and at least one anti-glare shield to reduce a risk for operator glare due to light entering the cabin from the window, and wherein the anti-glare shield comprises at least one element made of a material with a variable light transmission characteristic.
